# EUROPÄISCHE PATENTANMELDUNG

(11) **EP 0 791 564 A1**
(43) Veröffentlichungstag der Anmeldung: **27.08.1997**
(21) Anmeldenummer: 97100917.0
(22) Anmeldetag: 22.01.1997
(51) Int. Cl.: C03C 25/02, C08J 5/06

(54) **Wässriges Beschichtungsmittel für Verstärkungsfasern**

(30) Priorität: 24.01.1996 DE 19602350
(71) Anmelder: Glasseiden GmbH Oschatz, 04758 Oschatz (DE)
(72) Erfinder: Die Erfindernennung liegt noch nicht vor
(74) Vertreter: Polster, Brigitte

(57) **Zusammenfassung**

Durch Modifizierung des Beschichtungsmittels für Fasern, Fäden oder Folgeprodukten aus Glas, Kohlenstoff oder Aramid für Faserverbundstoffe unter Verwendung von Epoxidharzschmelzen soll die Festigkeit und Widerstandsfähigkeit des Verbundstoffes gegenüber der Einwirkung von Feuchtigkeit erhöht und die Verarbeitungsbedingungen bei der Prepregherstellung verbessert werden.

Das Beschichtungsmittel enthält neben den bekannten Bestandteilen eine katalysierende Substanz mit einem Massegehalt von 0,1 bis 3 %.

Bei Verwendung des Beschichtungsmittels auf den Verstärkungsmaterialien ist der Härtungsverlauf deutlich beschleunigt.

## Beschreibung

Die Erfindung betrifft ein wäßriges Beschichtungsmittel, wie Schlichte, Finish, Präparation und Avivage zur Behandlung Von Fasern, Fäden und Folgeprodukte aus Glas, Kohlenstoff oder Aramid für die Herstellung von Faserverbundstoffen unter Verwendung von Epoxidharzschmelzen.

Die Materialeigenschaften von Faserverbundstoffen werden bestimmt durch die Eigenschaftskennwerte der Verstärkungsfasern, des polymeren Matrixmaterials und außerdem durch die Grenzschicht zwischen Faser und Matrix. Da die Grenzschicht für die Karftübertragung zwischen Fasern und Matrix verantwortlich ist, muß diese so gestaltet werden, daß eine ausreichende Haftung gewährleistet ist. Haftmittel in Schlichten verbessern die Haftfähigkeit der Glasfilamente an die Matrix.

Im Falle einer Epoxidhatzmatrix werden in Schlichten für Glasfilamente bevorzugt organo-funktionelle Silane aus der Gruppe der Aminosilane angewendet.

Sie wirken in 2 Richtungen:
- Schaffung einer Bindung mit der Glasoberfläche durch eine oder mehrere Si-OH-Gruppen, die durch Hydrolyse des Silans entstehen;
- Schaffung einer Bindung mit der polymeren Matrix durch organo-funktionelle Gruppen in der Silanverbindung.

Die Haftmittel werden als sogenannte Finishes auch auf Gewebe aus Glasfilamente aufgebracht, deren Schlichte auf Stärke-Öl-Basis in einem vorausgehenden Arbeitsschritt, der 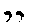 Entschlichten", von den Glasfilamenten entfernt wurde. In ihrer Art sind sie zumeist dem in Schlichten für Glasfilamente verwendeten identisch. Für eine Epoxidharzmatrix werden mit Aminosilan gefinishte Gewebe aus Glasfilamenten verwendet.

Nach DE-A 3436211 besteht ein Finish für Kohlenstoffasern aus einer wäßrigen Epoxidharzemulsion, der ein geringer Anteil eines Emulgators zugesetzt ist.

Der Finish bewirkt eine verbesserte Handhabung und Verarbeitung der Fasern durch verbesserte Schutzwirkung gegenüber mechanischer Beschädigung. Präparationen / Avivagen von Aramidfasern für die Faserverbundherstellung unter Verwendung von Epoxidharzschmelzen enthalten bekannterweise Polyethylenglykole und deren Veresterungsprodukte mit organischen Fettsäuren.

Der Nachteil bekannter Beschichtungsmittel für Verstärkungsmaterialen, wie Fasern, Fäden und Folgeprodukte aus Glas, Aramid oder Kohlenstoff besteht darin, daß die Haftung zur Matrix zwar gewährleistet, für Hochleistungsverbundstoffe jedoch die Festigkeit nicht ausreichend ist. Eine Erhöhung des Haftemittelanteils im Beschichtungsmittel erbringt keinen positiven Effekt.

Nachteilig bei der Verwendung von Verstärkungsmaterialien mit bekannten Beschichtungsmittel ist außerdem, daß bei der Prepregherstellung unter Verwendung von Epoxidharzschmelzen der Beschleuniger direkt den Harzansätzen zugesetzt werden muß. Das führt zu begrenzten Topfzeiten bei der Verarbeitung. Die Vernetzungsreaktionen beginnen bei Beschleunigerzusatz direkt in den Harzansätzen, was zur Einschränkung hinsichtlich der Ansatzmengen und gegebenenfalls zu Verlusten durch vorzeitige Härtung des Harzansatzes führt.

Die Erfindung bezweckt, durch eine Modifizierung des Beschichtungsmittels eine beschleunigte Härtungsreaktion des Epoxidharzes von der Faseroberfläche aus zu gewährleisten, um die Harzmatrix besser an die Faseroberfläche zu binden und damit die Festigkeit und Widerstandsfähigkeit des Prepreg gegenüber der Einwirkung von Feuchtigkeit zu erhöhen. Die Verarbeitungsbedingungen bei der Prepregherstellung sollen verbessert werden.

Diese Aufgabe wird erfindungsgemäß durch ein Beschichtungsmittel nach dem im Anspruch 1 benannten Merkmale gelöst.

Bevotzugte Ausführungsformen sind in den Unteransprüchen 2 bis 8 benannt. Die Verwendung des erfindungsgemäßen Beschichtungsmittels soll gemäß Nebenanspruch 9 erfolgen.

Die Grundzusammensetzung von Schlichten, Finishes und Präparationen für Fasern, Fäden und Folgeprodukte daraus aus Glas, Aramid oder Kohlenstoff als Verstärkungsmaterialien für Epoxidharzverbunde entspricht der üblichen Praxis. So können als Filmbildner, Hauptkomonente in Schlichten für Glasfilamente, ein UP-Harz, Polyurethan- und Epoxidharz in Form wäßriger Dispersionen verwendet werden. Als Haftvermittler in Schlichten oder als Finish auf Gewebe für Glasfilamente kommen amino- oder epoxyfunktionelle Silane oder Mercaptosilane in Betracht. Auch spezielle Verarbeitungshilfsmittel u.a. zum Erreichen des Schutzes der Filamente bei der Verarbeitung werden in herkömmlicher Weise zugesetzt.

Erfindungsgemäß erfolgt zu herkömmlichen Beschichtungsmitteln die Zugabe von 0,1 bis 3 Masse-% einer katalysierenden Substanz. In bekannter Weise hergestellte Glasfilamente, Kohlenstoffasern oder Aramidfasern oder Folgeprodukte daraus werden mit dein erfindungsgemäßen Beschichtungsmittel behandelt und getrocknet. Durch Imprägnieren mit einem Epoxidharz/Härtersystem erfolgt die Herstellung des Verbundstoffes (Prepreg).

Die vorteilhafte Wirkung der mit dem erfindungsgemäßen Beschichtungsmittel versehenen Verstärkungsmaterialien bei der Prepregherstellung mit Epoxidharzen ist, daß die Haftung Faser/Matrix verstärkt, die Kraftübertragung von der Oberfläche/Grenzschicht der Verstärkungsmaterialien aus verbessert, der Prepreg und der gehärtete Verbundstoffe für bestimmte Einsatzgebiete eine höhere Festigkeit und Widerstandsfähigkeit gegenüber der Einwirkung von Feuchtigkeit besitzt.

Ein weiterer Vorteil besteht darin, daß der Grad der beschleunigenden Wirkung auf den Härtungsmechanismus bei der Faserverbundherstellung beeinflußbar ist. Vorteilhaft ist außerdem, daß die Ansatzmengen des Harzes nicht beschränkt sind, weil die Vernetzungsreaktion nicht wie bisher in den Harzansätzen beginnt.

Das nun folgende Beispiel erläutert die Erfindung.

Es zeigen
- Figur 1: das Fließ-Härtungs-Verhalten von Prepregs durch den Viskositätsverlauf des Epoxidharzes in Abhängigkeit von Temperatur und Zeit im Härtungsprozeß
- Figur 2: die Meßkurven der DSC-Untersuchungen

### - Schichtezusammensetzung für Glasfilamente nach dem Stand der Technik:

| | Rohstoffe | Masse-% |
|---|---|---|
| Filmbildner: | ungesättigte PE-Harzemulation auf Basis Bisphenol A 47 % Feststoffgehalt (Neoxil 954/D-Hersteller: Fa.DSM) | 2,00 |
| Polymerweichmacher | Gesättigte PE-Harzemulation 60 % Feststoffgehalt (Neoxil 968/60-Hersteller: Fa.DSM) | 1,75 |
| Haftmittel: | Aminopropyltriethoxysilan (A 1100-Hersteller: Osi Specialties S.A.) | 0,50 |
| Schmiermittel: | z.B. Fettsäurepolyglycolester bzw. Kondensationsprodukt von Fettsäure und Polyaminen | 0.30 |
| oberflächenaktives, nichtionogenes Tensid: | z.B. Nonylphenolethoxylat bzw. Sorbitanmonosterat bzw. Fettalkohl-Ethylenoxidaddukt | 0,05 |

### - Schlichtezusammensetzung für Glasfilamente erfindungsgemäß:

Zu der nach dem Stand der Technik bekannten Schlichte für Glasfilamente erfolgt zur Herstellung des Prepregs A 1 die Zugabe von

| | |
|---|---|
| 2-Methylimidazol in Masse-% | 0,50 |
| zur Herstellung des Prepregs A 2 erfolgte die Zugabe von | |
| 2-Methylimidazol in Masse-% | 1,5 |

### - Herstellung der erfindungsgemäßen Schlichte für Glasfilamente

Im Mischbehälter wird ca. 25 % der Gesamtansatzmenge entionisiertes Wasser vorgelegt, das Aminosilan langsam zugegeben und bis zur vollständigen Hydrolyse ca. 30 min gerührt. Anschließend bringt man den pH-Wert des hydrolysierten Silans mit verdünnter Essigsäure auf 5 - 6.

In einem weiteren Ansatzbehälter werden in entionsiertem Wasser, das eine Temperatur von 50°C besitzt, das Schmiermittel und das oberflächenaktive Mittel gelöst und dem Aminosilanhydrolysat nach Abkühlung zugegeben.

Den polymeren Weichmacher läßt man mindestens 1 Stunde unter Rühren auf den Filmbildner einwirken und gibt die Mischung verdünnt dem Tensid/Silangemisch zu.

Im letzten Arbeitsgang verdünnt man die katalysierende Substanz auf eine ca. 10 %ige wäßrige Lösung und gibt sie unter Rühren dem Gesamtansatz zu, füllt das Endvolumen auf und stellt nach ca. 10 min Rührzeit den End-pH-Wert mittels verdünnter Essigsäure bzw. verdünntem Ammoniak auf 6 - 6,5 ein.

### - Herstellung der Prepregs

### Beispiel 1Prepreg A 1

Aus Glasfilamenten mit einer Gesamtfeinheit von 400 tex und einem Elementarfadendurchmesser von 16 µm, die mit dem erfindungsgemäßen Beschichtungsmittel (Schlichte) unter Zugabe von 0,5 Masse-% Methylimidazol in üblicher Weise unterhalb der Düsenwanne beschlichtet und getrocknet werden, und einem mittelmolekularen Epoxidharz mit Phenol-Novolak-Härter wird ein Prepreg wie folgt hergestellt:

Die Glasfilamente werden mit einer Geschwindigkeit von 8 m/min durch das in einer Tränkwanne auf 172 Grad Celsius erhitzte Harzbad und eine an der Wanne befindliche Düse mit einem Durchmesser von 0,7 mm geführt. Anschließend werden die imprägnierten Glasfilamente mit einer Steigerung von 1 mm/Umdrehung auf einen UD-Imprägnator gewickelt, der eine Temperatur von 95 °C aufweist. Nach Beendigung des Wickelvorgangs wird der Wickel aufgeschnitten, abgenommen und gestreckt. Aus den UD-Prepregs wird nach einem üblichen Preßverfahren ein Verbundstoff hergestellt.

### Beispiel 2 (Prepreg A2)

Mit gleichem Ausgangsmaterial, aber 1,5 Masse-% Methylimidazol in der Schlichte erfolgt in gleicher Weise die Herstellung des Prepreg A 2.

Prepreg B wird ebenfalls mit gleichem Ausgangsmaterial, welches mit der nach dem Stand der Technik bekannten Schlichten versehen ist, hergestellt.

### - Wikungsweise der erfindungsgemäßen Schlichte bei Prepreg A 1 und A 2 im Vergleich zu Prepreg B.

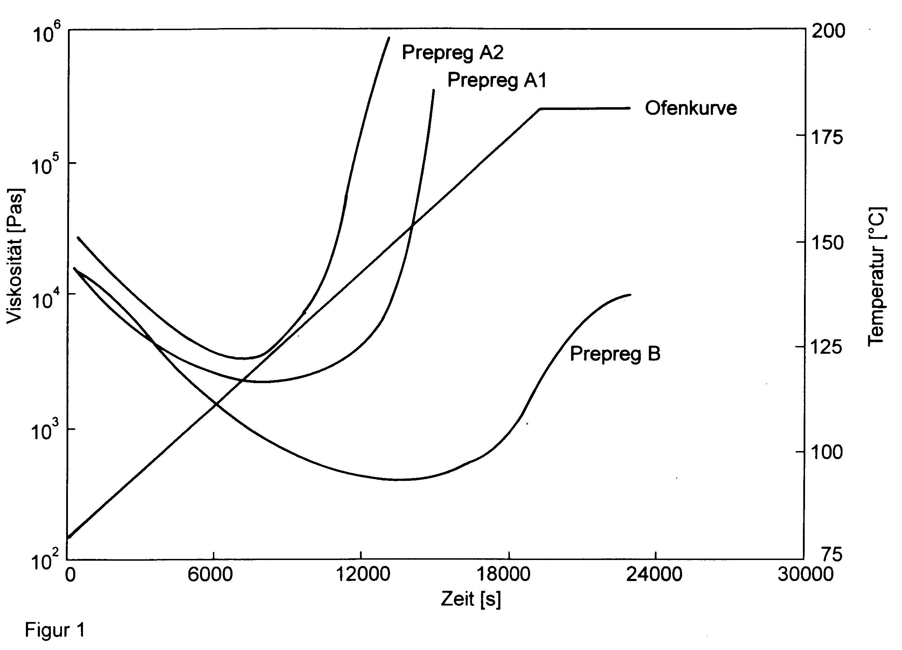

Aus Figur 1 ist ersichtlich, daß der Härtungsverlauf bei Prepreg A 1 und A 2 deutlich beschleunigt ist, denn die Härtung erfolgt bereits nach 140 bzw. 150 min und einer Temperatur von 125 bzw. 130 °C. Prepreg B zeigt dagegen erst bei 180 min und einer Temperatur von 170 °C Härtungsreaktionen. Die Messung wurden mit einem Cycloviskosimeter der Fa. PHYSICA 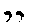 RHEOLAB MC 20" durchgeführt. Als günstigste Meßparameter ergaben sich eine Frequenz von 0,5 Hz und eine Deformation von 100 mrad.

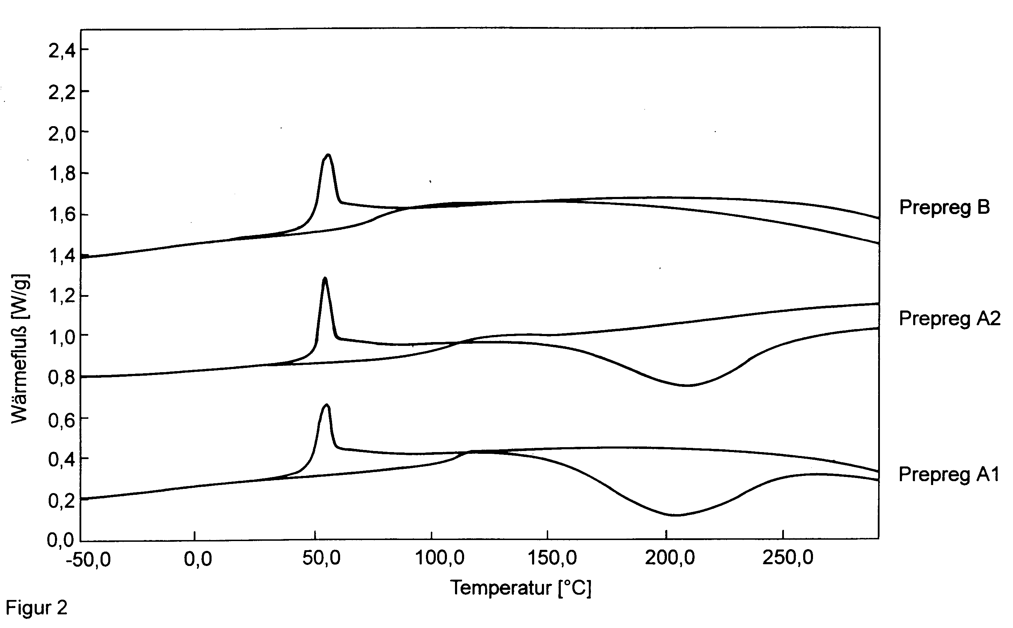

Diese Ergebnisse werden auch durch DSC-Messungen bestätigt (Figur 2), bei denen für die erfindungsgemäß beschlichteten Glasfilamente bei der Einlagerung im Harz ein Beginn der Härtungsreaktion bei A 1 bei 130 °C und bei A 2 bei 120 °C gefunden wurde. Für Glasfilamente mit bekannter Schlichte bei Prepreg B wurde der Härtungsbeginn erst bei 170 °C ermittelt.

## Patentansprüche

1. Wäßriges Beschichtungsmittel für Verstärkungsfasern bestehend aus einem Filmbildner und/oder Haftmittel und/oder oberflächenaktivem Mittel dadurch gekennzeichnet, daß eine katalysierende Substanz mit einem Massegehalt von 0,1 bis 3 % beigefügt ist.

2. Wäßriges Beschichtungsmittel nach Anspruch 1 dadurch gekennzeichnet, daß als katalysierende Substanz ein tertiäres Amin beigefügt ist.

3. Wäßriges Beschichtungsmittel nach Anspruch 1 dadurch gekennzeichnet, daß als katalysierende Substanz eine Phosponiumverbindung beigefügt ist.

4. Wäßriges Beschichtungsmittel nach Anspruch 1 dadurch gekennzeichnet, daß als katalysierende Substanz ein Imidazoiderivat beigefügt ist.

5. Wäßriges Beschichtungsmittel nach Anspruch 1 dadurch gekennzeichnet, daß als katalysierende Substanz ein Phenolderivat beigefügt ist.

6. Wäßriges Beschichtungsmittel nach Anspruch 1 dadurch gekennzeichnet, daß als katalysierende Substanz ein Perchlorat beigefügt ist.

7. Wäßriges Beschichtungsmittel nach Anspruch 1 dadurch gekennzeichnet, daß als katalysierende Substanz ein Harnstoffderivat beigefügt ist.

8. Wäßriges Beschichtungsmittel nach Anspruch 1 dadurch gekennzeichnet, daß als katalysierende Substanz eine Metallorgano-Verbindung beigefügt ist.

9. Verwendung des neuen Beschichtungsmittel gemäß Anspruch 1 zur Oberflächenbehandlung von Fasern, Fäden oder Folgeprodukten daraus aus Aramid oder Kohlenstoff für Faserverbundstoffe auf Epoxidharzbasis zur Erhöhung der Reakivität.
